# EUROPEAN PATENT APPLICATION

(11) **EP 4 718 389 A1**
(43) Date of publication of application: **01.04.2026**
(21) Application number: 25204490.4
(22) Date of filing: 25.09.2025
(51) Int. Cl.: G06V 10/82, G06V 20/59, G06V 20/64

(54) **AN OBJECT OF INTEREST (OOI) IDENTIFICATION SYSTEM FOR A VEHICLE AND METHOD THEREOF**

(30) Priority: 27.09.2024 IN 202411073243
(71) Applicant: Novus Hi-Tech Robotic Systemz Private Ltd., 122001 Gurgaon , Haryana (IN)
(72) Inventor: Kejriwal, Nishant, 122001 Gurgaon Haryana (IN); Kapuria, Anuj, 122001 Gurgaon Haryana (IN)
(74) Representative: Hafner & Kohl PartmbB

(57) **Abstract**

The present disclosure provides a system and a method for identifying an object of interest (OOI) for a vehicle. The system100 includes a first unit102, a second unit106, and a third unit104. The first unit102 generates a plurality of image data. The second unit106 measures a speed of the vehicle. The third unit104 uses a convolution neural network architecture, is configured to extract a feature point information to detect a presence of the OOI on a vehicle occupant body, extrapolate the object of interest towards at least one vehicle pillar, match and merge the extrapolated object of interest with the plurality of image data to calculate a number of the presence of the OOI in a real-time, and compare the calculated number of the presence of the OOI with a predefined threshold number of the OOI presence to confirm the presence of the OOI and perform a plurality of actions.

## Description

### TECHNICAL FIELD

The present invention relates to vehicle safety systems, and specifically to a system and method for identifying an object of interest (OOI) for a vehicle.

### BACKGROUND

Seatbelts are a critical safety feature in vehicles, significantly reducing the risk of injury or death in the event of a collision. Seatbelts are properly fastened and is essential for maximizing their protective benefits. Traditional seatbelt monitoring systems primarily detect whether the seatbelt is fastened, but they often lack the capability to provide detailed feedback or adapt to different driving scenarios.

Conventional seatbelt monitoring systems employed mechanical sensors within seatbelt buckles to detect engagement. More recent systems use electrical sensors to provide alerts when the seatbelt is not fastened. While these approaches represent advancements over purely mechanical methods, they have notable disadvantages like limited Detection Capability because these systems generally only confirm whether the seatbelt is engaged, without verifying if the seatbelt is properly fastened or if the driver is seated correctly. These systems also are not able to adjust their functionality based on vehicle speed or other dynamic conditions, which can limit their effectiveness in different driving situations.

Some traditional systems use cameras to capture and analyze images of the driver and seatbelt. These systems can offer improved detection capabilities, but they also face several challenges in terms of accuracy, adaptability, and the ability to provide detailed feedback based on dynamic driving conditions.

For example, W.O. Patent 2013184832 A2 relates to a system and method for video capture, user feedback, reporting, adaptive parameters, and remote data access in vehicle safety monitoring. The present disclosure is a method for vehicle data management (VDM) according to embodiments of the present invention includes receiving an accelerometer signal from an accelerometer, determining an accelerometer specific force, and receiving a speed signal. Further, the method determines an instantaneous acceleration of the vehicle, selecting a current observed acceleration, capturing video footage with a camera mounted on the vehicle, and flagging the video footage corresponding to a time when the current observed acceleration exceeds a preset safe force value.

The above prior art discloses the vehicle monitoring method that utilizes Vehicle Data Management (VDM) to monitor the position of the seatbelt. The above system includes a 360-degree camera providing a complete view of the vehicle, including the driver. The vehicle management system further detects the vehicle's ignition status and speed and determines whether the driver is seated and wearing the seatbelt.

U.S. patent 10991245 B2 discloses a system and method of two-way wireless communication for connected car vehicles. Wireless communication is based on low-power, wide-area communication technology, particularly Random Phase Multiple Access (RPMA) communication network. The system consists of a device connected to an On-board diagnostics (OBD) port on the vehicle and onboard sensors to provide guidance to the driver. The device utilizes an audio unit, a display unit, and/or a combination thereof to warn about a potential hazard. The device further includes a plurality of sensors to sense the plurality of events.

The above-cited prior art discloses the system and method for two-way wireless communication. The invention includes an On-Board AI connector that analyzes human behavior and monitors vehicle information such as speed, acceleration, and driver seatbelt position. The seatbelt data is captured when the ignition is ON, and if the seatbelt is unbuckled and the vehicle exceeds a threshold speed, the system sends a warning signal to the driver.

None of the aforementioned prior arts includes the categorization of a measured vehicle speed into three speed ranges including a first speed range, a second speed range, and a third speed range. Additionally, the prior art also does not include the plurality of actions performed by a third unit based on the measured vehicle speed.

The present invention addresses the aforementioned issues and aims to provide an improved system and method for identifying an object of interest (OOI) of a vehicle for ensuring the OOI (e.g. a seatbelt) usage and improving overall vehicle safety.

### OBJECTIVES OF THE DISCLOSURE

A primary objective of the present disclosure is to provide a system and a method for identifying a presence of an object of interest (OOI) (e.g. a seat belt) on a driver and other occupants body to enhance overall safety.

Another objective of this invention is to provide the system that offers an automatic real-time alerts to the occupants of the vehicle if an absence of the OOI on the driver body is determined by the system.

Another objective of this invention is to provide the system that performs a plurality of actions based on a measured speed of the vehicle when a calculated number of the presence of the object of interest is below a predefined threshold number of the object of interest presence.

Yet another objective of the present disclosure is to provide the system that enhances safety measures that further lead to fewer accidents and collisions, lowering the risk of injury and property damage.

### SUMMARY OF THE DISCLOSURE

The following is a summary description of illustrative embodiments of the invention. It is provided as a preface to assist those skilled in the art to more rapidly assimilate the detailed design discussion which ensues and is not intended in any way to limit the scope of the claims which are appended hereto in order to particularly point out the invention.

An embodiment of the present invention relates to a system and a method for identifying an object of interest (OOI) for a vehicle. The system includes a first unit, a second unit, and a third unit to perform many tasks.

In accordance with an embodiment of the present invention, the first unit generates a plurality of image data by capturing a plurality of images of a vehicle occupant. Further, the first unit is a detection unit that includes a camera, and an image processing unit that includes an image sensor, an image processor, an image cropping module, an image filter, a neural network module, and others.

In accordance with an embodiment of the present invention, the plurality of images includes a face image, an eye closure image, a seatbelt image, a trunk area image of the vehicle, and others

In accordance with an embodiment of the present invention, the second unit is configured to measure a speed of the vehicle. Further, the second unit includes a vehicle speed sensor that is included but not limited to a wheel speed sensor, a Lidar speed sensor, a radar speed sensor, a navigation speed sensor, a tachometer, an optical speed sensor, an Inertial Measurement Unit (IMU), and among others

In accordance with an embodiment of the present invention, the third unit using a convolution neural network architecture, is configured to extract a feature point information from the plurality of image data and detect a presence of the object of interest on a vehicle occupant body based on the extracted feature point information.

In accordance with an embodiment of the present invention, the third unit extrapolates the object of interest towards at least one pillar of the vehicle and matches and merges the extrapolated object of interest with the plurality of image data to calculate a number of the presence of the object of interest in a real-time.

In accordance with an embodiment of the present invention, the at least one pillar is anyone or combination of a center or post pillar, a rear pillar, and a back roof pillar of the vehicle. Further, the third unit identifies a depth information while matching and merging the extrapolated object of interest with the plurality of image data for accurate calculation of the number of the presence of the object of interest.

In accordance with an embodiment of the present invention, the third unit compares the calculated number of the presence of the object of interest with a predefined threshold number of the object of interest presence to confirm the presence of the object of interest and perform a plurality of actions.

In accordance with an embodiment of the present invention, the third unit confirms the presence of the object of interest, when the calculated number of the presence of the object of interest is above or equal to the predefined threshold number of the object of interest presence.

In accordance with an embodiment of the present invention, the third unit performs the plurality of actions based on the measured speed of the vehicle, when the calculated number of the presence of the object of interest is below the predefined threshold number of the object of interest presence.

In accordance with an embodiment of the present invention, the second, and third unit is a monitoring unit and a processing unit, respectively. Further, the third unit dynamically adjusts the predefined threshold limit based on the vehicle speed and the plurality of image data.

In accordance with an embodiment of the present invention, the third unit further categorizes the measured vehicle speed into three speed ranges including a first speed range, a second speed range, and a third speed range. In an example, the first speed range includes the vehicle speed which is less than 15 km/h, the second-speed range includes the vehicle speed which lies between 15 km/h and 25 km/h, and the third speed range includes the vehicle speed which is greater than 25 km/h. In addition, the three speed ranges may be predefined by the system 100. Furthermore, the three speed ranges may vary on the basis of a plurality of factors, such as history profile information of any vehicle occupant, current driving behaviour of the vehicle occupant, vehicle servicing log, a current vehicle condition, etc.

In accordance with an embodiment of the present invention, the plurality of actions performed by the third unit based on the vehicle speed category, includes monitoring continuously the measured vehicle's speed, the extracted feature point information, and the presence of the object of interest, when the vehicle speed lies within the first speed range. Further, the plurality of actions includes analyzing a plurality of additional parameters with a secondary check of the measured vehicle's speed, the extracted feature point information, and the presence of the object of interest, when the vehicle speed lies within the second speed range, and involving a manual review for further analysis with continuous check of the measured vehicle's speed, the extracted feature point information, and the presence of the object of interest, when the vehicle speed lies within the third speed range.

In accordance with an embodiment of the present invention, the system alerts the driver and other vehicle occupants by generating a warning signal when the calculated number of presences of object of interest is below the predefined threshold number of the object of interest.

In accordance with an embodiment of the present invention, the system logs the detection result of the presence of the object of interest into a storage unit.

In accordance with an embodiment of the present invention, the system further monitors, periodically, the presence of the object of interest on the vehicle occupant body by the third unit, and provides a real-time update and the warning signal to the driver and other vehicle occupant if a status of the object of interest is changed.

In accordance with an embodiment of the present invention, the system further includes calibrating, periodically, the measurement of the vehicle speed to ensure a speed measurement accuracy, and updating the second unit according to the calibration.

According to another embodiment of the present invention, the method includes a first unit, a second unit, and a third unit to perform multiple steps.

In accordance with an embodiment of the present invention, in the first step, the first unit generates a plurality of image data by capturing a plurality of images of a vehicle occupant.

In accordance with an embodiment of the present invention, in the second step, the second unit is configured to measure a speed of the vehicle.

In accordance with an embodiment of the present invention, in the third step, the third unit using a convolution neural network architecture, is configured to extract a feature point information from the plurality of image data to identify the OOI.

In accordance with an embodiment of the present invention, in the fourth step, the third unit extrapolates the object of interest towards at least one pillar of the vehicle.

In accordance with an embodiment of the present invention, in the fifth step, the third unit matches and merges the extrapolated object of interest with the plurality of image data to calculate a number of the presence of the object of interest in a real-time.

In accordance with an embodiment of the present invention, in the sixth step, the third unit compares the calculated number of the presence of the object of interest with a predefined threshold number of the object of interest presence to confirm the presence of the object of interest, as shown in the seventh step and perform a plurality of actions, as shown in the eighth step.

These and other aspects herein will be better appreciated and understood when considered in conjunction with the following description and the accompanying drawing.

It should be understood, however, that the following descriptions are given by way of illustration and not of limitation. Many changes and modifications may be made within the scope of the invention herein without departing from the spirit thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
FIG. 1 illustrates a system 100 for identifying an object of interest (OOI) for a vehicle, according to an embodiment of a present invention
Fig. 2 is a flow chart illustrating a method 200for performing the plurality of actions when a measured speed lies in a first speed range, according to an exemplary embodiment of the present invention
Fig. 3 is a flow chart illustrating a method 300 for performing the plurality of actions when the measured speed lies in a second speed range, according to another exemplary embodiment of the present invention
Fig. 4 is a flow chart illustrating a method 400 for performing the plurality of actions when the measured speed lies in a third speed range, according to another exemplary embodiment of the present invention
Fig. 5 schematically illustrates, in terms of a number of modules 500 based on a CNN architecture, according to another exemplary embodiment of the present invention;
Fig 6 is a flow chart illustrating a method 600 for confirming the presence of seatbelt by analyzing a depth information, according to another exemplary embodiment of the present invention; and
Fig. 7 is a flow chart illustrating a method 700 for identifying an object of interest (OOI) for the vehicle, according to another embodiment of the present invention.

It should be noted that the accompanying figure is intended to present illustrations of a few examples of the present disclosure. The figure is not intended to limit the scope of the present disclosure. It should also be noted that the accompanying figure is not necessarily drawn to scale.

### DETAILED DESCRIPTION

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of elements or steps but not the exclusion of any other element or step or group of elements or steps.

The term "including" is used to mean "including but not limited to". "Including" and "including but not limited to" are used interchangeably. The accompanying drawing is used to help easily understand various technical features and it should be understood that the alternatives presented herein are not limited by the accompanying drawing. As such, the present disclosure should be construed to extend to any alterations, equivalents and substitutes in addition to those which are particularly set out in the accompanying drawing. Although the terms first, second, etc. may be used herein to describe various elements, these elements should not be limited by these terms. These terms are generally only used to distinguish one element from another.

Conditional language used herein, such as, among others, "can," "may," "might," "e.g.," and the like, unless specifically stated otherwise, or otherwise understood within the context as used, is generally intended to convey that certain alternatives include, while other alternatives do not include, certain features, elements and/or steps. Thus, such conditional language is not generally intended to imply that features, elements and/or steps are in any way required for one or more alternatives or that one or more alternatives necessarily include logic for deciding, with or without other input or prompting, whether these features, elements and/or steps are included or are to be performed in any particular alternative. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain alternatives require at least one of X, at least one of Y, or at least one of Z to each be present.

Terms vehicle occupant and occupant may be used interchangeably for convenience.

Terms object of interest and OOI may be used interchangeably for convenience.

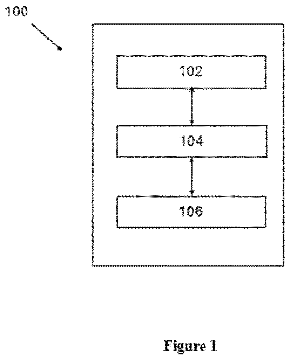

FIG. 1 illustrates a system 100 for identifying an object of interest (OOI) for a vehicle, according to an embodiment of a present invention. The system 100 includes a first unit 102, a second unit 106, and a third unit 104 to perform many tasks. Further, the object of interest (OOI) is a seatbelt worn by an occupant inside the vehicle.

In accordance with an embodiment of the present invention, the first unit 102 generates a plurality of image data by capturing a plurality of images of the vehicle occupants. Further, the first unit 102 is a detection unit that includes a camera, and an image processing unit that includes an image sensor, an image processor, an image cropping module, an image filter, a neural network module, and others.

In one embodiment, the detection unit may also include a face detection unit, an eye detection unit, a trunk detection unit, and a seatbelt detection unit for detecting the vehicle occupant's face, eye, trunk area, and a presence of the seatbelt on the occupant's body respectively.

In accordance with an embodiment of the present invention, the plurality of images includes a face image, an eye closure image, a seatbelt image, a trunk area image of the vehicle, and others.

In one embodiment, the camera or multiple cameras are strategically positioned within the vehicle to capture images of the vehicle occupant, including their face and trunk area. This component ensures that a clear and comprehensive visual of the seatbelt and occupant's position is obtained. Further, the image sensor and processing unit capture and process the images. The images are then cropped to focus on the relevant areas, such as the vehicle occupant's face and the trunk area where the seatbelt is located.

In accordance with an embodiment of the present invention, the second unit is configured to measure a speed of the vehicle. Further, the second unit includes a vehicle speed sensor that is included but not limited to a wheel speed sensor, a Lidar speed sensor, a radar speed sensor, a navigation speed sensor, a tachometer, an optical speed sensor, an Inertial Measurement Unit (IMU), and among others

In accordance with an embodiment of the present invention, the third unit 104 using a convolution neural network architecture, is configured to extract a feature point information from the plurality of image data and detect a presence of the object of interest on the vehicle occupant body based on the extracted feature point information.

In one embodiment, the CNN architecture extracts the feature point information from the plurality of image data to identify the specific points or regions in the plurality of images that indicate the presence or absence of the seatbelt.

In accordance with an embodiment of the present invention, the third unit 104 extrapolates the object of interest towards at least one pillar of the vehicle, and matches and merges the extrapolated object of interest with the plurality of image data to calculate a number of the presence of the object of interest in a real-time.

In accordance with an embodiment of the present invention, the at least one pillar is anyone or combination of a center or post pillar, a rear pillar, and a back roof pillar of the vehicle. Further, the third unit 104 identifies a depth information while matching and merging the extrapolated object of interest with the plurality of image data for accurate calculation of the number of the presence of the object of interest.

In accordance with an embodiment of the present invention, the third unit 104 compares the calculated number of the presence of the object of interest with a predefined threshold number of the object of interest presence to confirm the presence of the object of interest and perform a plurality of actions.

In accordance with an embodiment of the present invention, the third unit 104 confirms the presence of the object of interest, when the calculated number of the presence of the object of interest is above or equal to the predefined threshold number of the object of interest presence.

In accordance with an embodiment of the present invention, the third unit 104 performs the plurality of actions based on the measured speed of the vehicle, when the calculated number of the presence of the object of interest is below the predefined threshold number of the object of interest presence.

In accordance with an embodiment of the present invention, the second 106, and third unit 104 is a monitoring unit and a processing unit, respectively. Further, the third unit 104 dynamically adjusts the predefined threshold limit based on the vehicle speed and the plurality of image data.

In accordance with an embodiment of the present invention, the third unit 104 further categorizes the measured vehicle speed into three speed ranges including a first speed range, a second speed range, and a third speed range. In an example, the first speed range includes the vehicle speed which is less than 15 km/h, the second-speed range includes the vehicle speed which lies between 15 km/h and 25 km/h, and the third speed range includes the vehicle speed which is greater than 25 km/h. In addition, the three speed ranges may be predefined by the system 100. Furthermore, the three speed ranges may vary on the basis of a plurality of factors, such as history profile information of any vehicle occupant, current driving behaviour of the vehicle occupant, vehicle servicing log, a current vehicle condition, etc.

In accordance with an embodiment of the present invention, the plurality of actions performed by the third unit 104 based on the vehicle speed category, includes monitoring continuously the measured vehicle's speed, the extracted feature point information, and the presence of the object of interest, when the vehicle speed lies within the first speed range. Further, the plurality of actions includes analyzing a plurality of additional parameters with a secondary check of the measured vehicle's speed, the extracted feature point information, and the presence of the object of interest, when the vehicle speed lies within the second speed range, and involving a manual review for further analysis with continuous check of the measured vehicle's speed, the extracted feature point information, and the presence of the object of interest, when the vehicle speed lies within the third speed range.

In accordance with an embodiment of the present invention, the system 100 alerts the driver and other occupants by generating a warning signal when the calculated number of presences of object of interest is below the predefined threshold number of the object of interest. Further, the warning signal is an audio signal, a video signal, a visual signal, and a haptic alert signal.

In accordance with an embodiment of the present invention, the system 100 logs the detection result of the presence of the object of interest into a storage unit.

In accordance with an embodiment of the present invention, the system 100 further monitors, periodically, the presence of the object of interest on the vehicle occupant body by the third unit 104 and provides a real-time update and the warning signal to the vehicle occupant if a status of the object of interest is changed.

In accordance with an embodiment of the present invention, the system 100 further includes calibrating, periodically, the measurement of the vehicle speed to ensure a speed measurement accuracy and updating the second unit according to the calibration.

Furthermore, the processing unit is configured to execute one or more steps interpreted as an algorithm structure. Further, the storage unit includes a memory that stores algorithm steps, and the processing unit executes the algorithm steps to perform one or more processes of the system 100 and method 700 in accordance with various exemplary embodiments of the present disclosure.

The storage unit according to exemplary embodiments of the present disclosure may be implemented through a nonvolatile memory configured to store algorithms for controlling the operation of various components of the vehicle or data about software commands for executing the algorithms, and the processing unit configured to perform operation to be described above using the data stored in the storage unit. The storage unit and the processing unit may be individual chips.

Alternatively, the storage unit and the processing unit may be integrated into a single chip. The processing unit may be implemented as one or more processors. The processing unit may include various logic circuits and operation circuits, may process data according to a program provided from the storage unit, and may generate a control signal according to the processing result.

The processing unit is operated by a predetermined program which may include a series of commands for carrying out the present method included in the aforementioned various exemplary embodiments of the present disclosure.

The aforementioned invention may also be embodied as computer-readable code on a computer-readable recording medium. The computer-readable recording medium is any data storage device that can store data which may be thereafter read by a computer system and store and execute program instructions which may be thereafter read by a computer system.

Examples of the computer-readable recording medium include Hard Disk Drive (HDD), solid state disk (SSD), silicon disk drive (SDD), read-only memory (ROM), random-access memory (RAM), flash memory, CD-ROMs, magnetic tapes, floppy discs, optical data storage devices, etc and implementation as carrier waves (e.g., transmission over the Internet). Examples of the program instruction include machine language code such as those generated by a compiler, as well as high-level language code which may be executed by a computer using an interpreter or the like.

In various exemplary embodiments of the present disclosure, the processing unit may be implemented in a form of hardware or software or may be implemented in a combination of hardware and software.

In various exemplary embodiments of the present disclosure, the processing unit may also include one or more input/output ("I/O") ports (e.g., serial ports, (e.g., RS233 port, USB, etc.) (not shown) and one or more network interfaces. The I/O port or ports may be operable to communicate with input/output devices, such as an internal and/or external display, keypad, mouse, pointing device, control panel, touch screen display, another computer-based device, printer, remote control, microphone, speaker, etc., which facilitates user interaction with the processing unit.

Furthermore, the terms such as "unit", "module", etc. included in the specification mean units for processing at least one function or operation, which may be implemented by hardware, software, or a combination thereof.

In accordance with another exemplary alternative embodiment of the present invention, the vehicle is generally equipped with the IoT which may or may not be integrated with the processing unit.

In another alternative embodiment, the IoT is internally connected with a GSM (Global System for mobile communication) and network modules, allowing it to send notifications to the user interface. In one embodiment, the system 100 provides the real-time update and the warning signal to the vehicle occupant through a user interface if the status of the object of interest is changed. In one exemplary embodiment, when the system 100 identifies that the vehicle occupant is not wearing the seatbelt then the system 100 sends the alert to the occupant to their user interface through a communication unit.

In accordance with an exemplary embodiment of the present invention, the user interface is any one or a combination of a desktop computer, a laptop computer, a user computer, a tablet computer, a personal digital assistant (PDA), a cellular telephone, a communication unit appliance, a camera, a smartphone, an enhanced general packet radio service (EGPRS) mobile phone, a media player, a navigation device, an email device.

Furthermore, the user interface may provide access to and/or receive application software executed and/or stored on any of the servers. Further, the server is a remote server or a local server. Further, the remote server is a cloud server.

In accordance with an embodiment of the present invention, the processing unit is connected to the server through the communication unit that is any one of a wired-communication unit and/or a wireless communication unit.

In some examples, the user device performs functions of a social communication unit (not shown) to the cloud server. In some implementations, the user device may communicate wirelessly through the communication unit that is the part of a controller area network (CAN), which may include digital signal processing circuitry where necessary.

In one embodiment, the communication unit is configured to allow communication between the processing unit, the storage unit, the user interface and the server. In particular, the communication unit may any communication unit, such as, but not limited to, the Internet, wireless networks, local area networks, wide area networks, private networks, a cellular communication unit, corporate network having one or more wireless access points or a combination thereof connecting any number of mobile clients, fixed clients, and servers and so forth. Examples of communication unit may include the Internet, a WIFI connection, a Bluetooth connection, a Zigbee connection, a communication network, a wireless communication unit, a 3G communication, network, a 4G communication unit, a 5G communication unit, a USB connection, or any combination thereof. For example, the communication may be based on a radio-frequency transceiver (not shown). In addition, short-range communication may occur, such as using Bluetooth, Wi-Fi, or other such transceivers.

In one embodiment, the processor is associated with the vehicle control unit (VCU) of the vehicle to perform all functions. In one embodiment, the controller area network (CAN) bus allows communication between these units (102,104,106), enabling the integration of speed-related data and coordination of responses across different units.

In one embodiment, the plurality of images is captured continuously or at regular intervals by camera and processes each image to isolate relevant features by detecting and cropping out unwanted elements by the image processing unit. The image processing unit further applies machine learning algorithms to the preprocessed images to identify the presence of the seatbelt on the occupant's body. These algorithms may involve convolutional neural networks (CNNs) or other advanced techniques for feature extraction and calculation. The Convolutional Neural Network (CNN) architecture consists of at least thirteen layers, including at least six convolutional layers, at least five subsampling layers, and at least two fully connected layers.

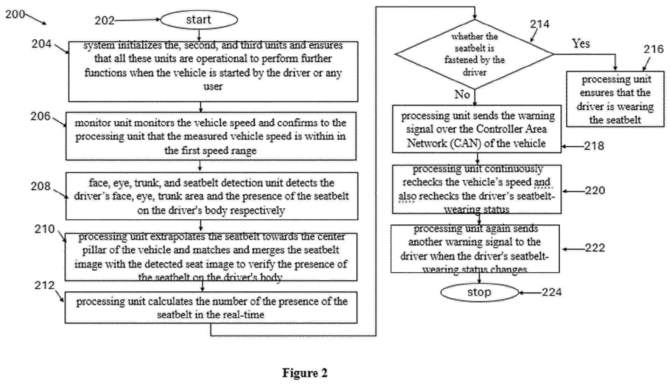

Fig. 2 is a flow chart 200 illustrating a method for performing the plurality of actions when the measured speed lies in the first speed range, according to an exemplary embodiment of the present invention. The flowchart 200 starts at step 202 and proceeds to steps 204, 206, 208, 210, 212, 214, 216, 218, 220, 222 and 224.

The method is first operative at step 202.

At step 204, the system 100 initializes the first 102, second 106, and third 104 units and ensures that all units (102,104,106) are operational to perform further functions when the vehicle is started by the driver or any vehicle occupant.

At step 206, the monitoring unit monitors the vehicle speed and confirms to the processing unit that the measured vehicle speed is within in the first speed range i.e. the vehicle speed is between 0 km/h and 15 km/h.

At step 208, the face, eye, trunk, and seatbelt detection unit detect the driver's face, eye, trunk area and the presence of the seatbelt on the driver's body respectively.

At step 210, the processing unit extrapolates the seatbelt towards the center pillar of the vehicle and matches and merges the seatbelt image with the detected seatbelt images to verify the presence of the seatbelt on the driver's body.

At step 212, the processing unit calculates the number of the presence of the seatbelt in real-time.

At step 214, a determination is made whether the seatbelt is fastened by the driver based on the calculated number of presence of the seatbelt, when the determination is "YES", then the flowchart 200 proceeds to step 216 otherwise the flowchart 200 proceeds to step 218.

At step 216, the processing unit ensures that the driver is wearing the seatbelt.

At step 218, the processing unit sends the warning signal over the Controller Area Network (CAN) of the vehicle. This warning signal alerts the driver to take preventive measures.

At step 220, the processing unit continuously rechecks the vehicle's speed and also rechecks the driver's seatbelt-wearing status.

At step 222, the processing unit again sends another warning signal to the driver when the driver's seatbelt-wearing status changes.

At step 224, the method is terminated.

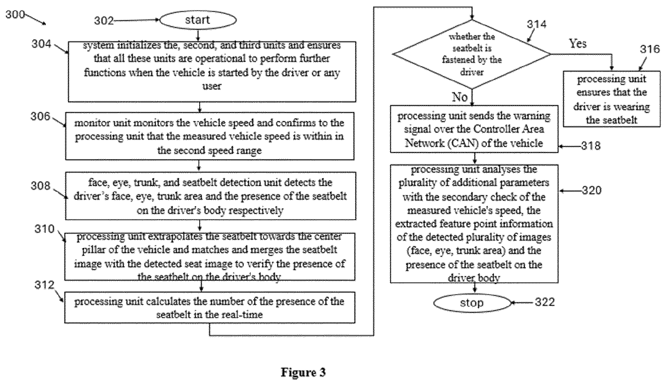

Fig. 3 is a flow chart 300 illustrating a method for performing the plurality of actions when the measured speed lies in the second speed range, according to another exemplary embodiment of the present invention. The flowchart 300 starts at step 302 and proceeds to steps 304, 306, 308, 310, 312, 314, 316, 318, 320, and 322.

The method is first operative at step 302.

At step 304, the system 100 initializes the first 102, second 106, and third units 104 and ensures that all these units (102,104,106) are operational to perform further functions when the vehicle is started by the driver or any vehicle occupant.

At step 306, the monitoring unit monitors the vehicle speed and confirms to the processing unit that the measured vehicle speed is within in the second speed range i.e. the vehicle speed is between 15 km/h and 25 km/h.

At step 308, the face, eye, trunk, and seatbelt detection unit detect the driver's face, eye, trunk area and the presence of the seatbelt on the driver's body respectively.

At step 310, the processing unit extrapolates the seatbelt towards the center pillar of the vehicle and matches and merges the extrapolated seatbelt image with the detected seatbelt image to verify the presence of the seatbelt on the driver's body.

At step 312, the processing unit calculates the number of the presence of the seatbelt in real-time.

At step 314, a determination is made whether the seatbelt is fastened by the driver based on the calculated number of presences of the seatbelt, when the determination is "YES", then the flowchart 300 proceeds to step 316 otherwise the flowchart 300 proceeds to step 318.

At step 316, the processing unit ensures that the driver is wearing the seatbelt.

At step 318, the processing unit sends the warning signal over the Controller Area Network (CAN) of the vehicle. This warning signal is the audio signal that lasts for 35 seconds and repeats every 35 seconds with a 3-second pause until the seatbelt is fastened by the driver.

At step 320, the processing unit analyses the plurality of additional parameters with the secondary check of the measured vehicle's speed, the extracted feature point information of the detected plurality of images (face, eye, trunk area) and the presence of the seatbelt on the driver body.

At step 322, the method is terminated.

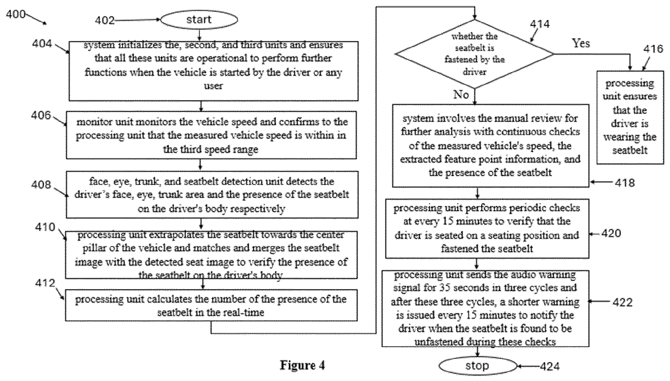

Fig. 4 is a flow chart 400 illustrating a method for performing the plurality of actions when the measured speed lies in the third speed range, according to another exemplary embodiment of the present invention. The flowchart 400 starts at step 402 and proceeds to steps 404, 406, 408, 410, 412, 414, 416, 418, 420, 422 and 424.

The method is first operative at step 402.

At step 404, the system 100 initializes the first 102, second 106, and third units 104 and ensures that all these units (102,104,106) are operational to perform further functions when the vehicle is started by the driver or any vehicle occupant.

At step 406, the monitoring unit monitors the vehicle speed and confirms to the processing unit that the measured vehicle speed is within the third speed range i.e. the vehicle speed is greater than 25 km/h.

At step 408, the face, eye, trunk, and seatbelt detection unit detect the driver's face, eye, trunk area and the presence of the seatbelt on the driver's body respectively.

At step 410, the processing unit extrapolates the seatbelt towards the center pillar of the vehicle and matches and merges the extrapolated seatbelt image with the detected seatbelt image to verify the presence of the seatbelt on the driver's body.

At step 412, the processing unit calculates the number of the presence of the seatbelt in real-time.

At step 414, a determination is made whether the seatbelt is fastened by the driver based on the calculated number of presence of the seatbelt, when the determination is "YES", then the flowchart 400 proceeds to step 416 otherwise the flowchart 400 proceeds to step 418.

At step 416, the processing unit ensures that the driver is wearing the seatbelt.

At step 418, the system 100 involves the manual review for further analysis with continuous checks of the measured vehicle's speed, the extracted feature point information, and the presence of the seatbelt.

At step 420, the processing unit performs periodic checks at every 15 minutes to verify that the driver is seated on a seating position and fastened the seatbelt.

At step 422, the processing unit sends the audio warning signal for 35 seconds in three cycles and after these three cycles, a shorter warning is issued every 15 minutes to notify the driver when the seatbelt is found to be unfastened during these checks.

At step 424, the method is terminated.

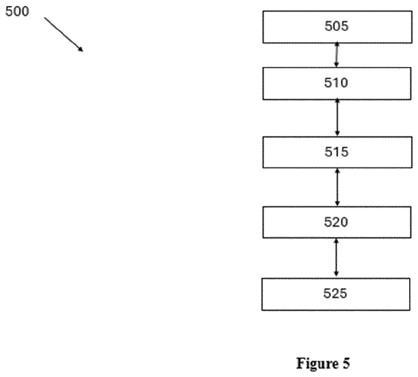

Fig. 5 schematically illustrates, in terms of a number of modules 500 based on the CNN architecture, according to another exemplary embodiment of the present invention. The number of functional modules comprises an input module 505, a feature extraction module 510, a dimensionality reduction module 515, a flattening module 520, and an identification module 525.

In one embodiment, the Convolutional Neural Network (CNN) is used to process and analyze the plurality of images to accurately detect the presence and status of the seatbelt. The CNN architecture consists of several layers, each with a specific function that contributes to the overall effectiveness of the seatbelt detection. The CNN used in this invention comprises 13 layers, which include a combination of the convolutional layers, the subsampling (pooling) layers, and the fully connected layers. Each layer serves a distinct purpose in feature extraction, dimensionality reduction, and OOI identification.

In one embodiment, the input module 505 captures images of the vehicle occupant and seatbelt. These images are resized and converted to grayscale to ensure consistency in input data.

In one embodiment, the feature extraction module 510 applies multiple filters to the input image to detect various features. The CNN Initial layers capture basic features, while deeper layers detect more complex patterns relevant to seatbelt detection.

In one embodiment, the feature extraction module 510 further reduces the size of the feature maps, preserving important features while minimizing computational complexity and reducing overfitting.

In one embodiment, the flattening module 515 converts a 2D feature maps into a 1D vector, preparing the data for the fully connected layers of the CNN architecture.

In one embodiment, the identification module 520 processes the flattened 1D vector and combines features to identify the seatbelt status in the fully connected layers. The identification module 520 provides the identification result, indicating whether the seatbelt is fastened or not.

In one embodiment, the decision module 525 determines if the seatbelt is properly fastened and takes appropriate actions, such as issuing warnings or alerts.

Analyze depth data to confirm whether the seatbelt is correctly positioned across the vehicle occupant's body

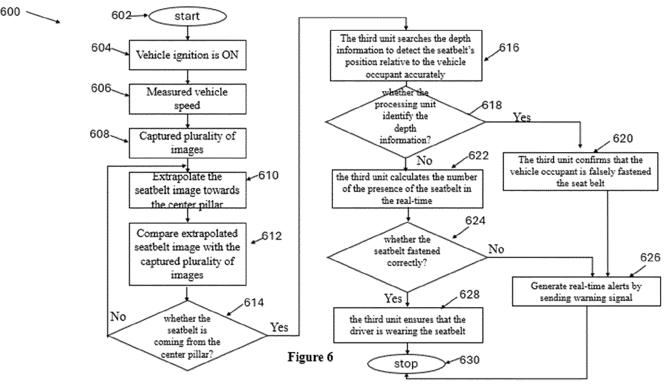

Fig 6 is a flow chart 600 illustrating a method for confirming the presence of seatbelt by analyzing a depth information, according to another exemplary embodiment of the present invention. The flowchart 600 starts at step 602 and proceeds to steps 604, 606, 608, 610, 612, 614, 616, 618, 620, 622, 624,626,628 and 638.

The method is first operative at step 602.

At step 604, the user ON the vehicle ignition.

At step 606, the second unit 106 measures the vehicle speed.

At step 608, the first unit 102 captures the plurality of images and generates the plurality of image data.

At step 610, the third unit 104 extrapolates the seatbelt image towards the center pillar of the vehicle.

At step 612, the third unit 104 compares the extrapolated seatbelt image with the captured plurality of images after merging and matching the extrapolated seatbelt image with the plurality of image data.

At step 614, a determination is made whether the seatbelt is coming from the center pillar, when the determination is "YES", then the flowchart 600 proceeds to step 616 otherwise the flowchart 600 proceeds to step 610.

At step 616, the third unit 104 determines the depth information to detect the seatbelt's position relative to the vehicle occupant accurately.

At step 618, another determination is made whether the processing unit identifies the depth information, when the determination is "YES", then the flowchart 600 proceeds to step 620 otherwise the flowchart 600 proceeds to step 622.

At step 620, the third unit 104 confirms that the vehicle occupant is falsely fastened to the seat belt and the flowchart proceeds to step 626.

At step 622, the third unit 104 calculates the number of the presence of the seatbelt in the real-time.

At step 624, another determination is made whether the seatbelt fastened correctly at the vehicle occupant's body, when the determination is "YES", then the flowchart 600 proceeds to step 628 otherwise the flowchart 600 proceeds to step 626.

At step 626, the third unit 104 generates real-time alerts by sending the warning signal to the vehicle occupant.

At step 628, the third unit 104 ensures that the vehicle occupant is wearing the seatbelt in a correct manner.

At step 630, the method is terminated.

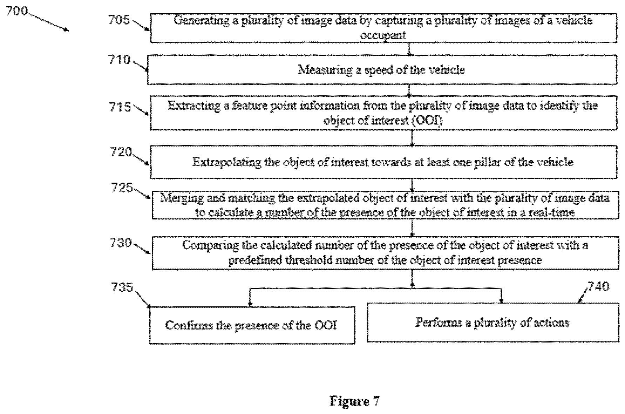

Fig. 7 is a block diagram illustrating a method 700 for identifying an object of interest (OOI) for the vehicle, according to another embodiment of the present invention. The method 700 includes a first unit 102, a second unit 106, and a third unit 104 to perform multiple steps. The method 700 starts at step 705 and proceeds to steps 710, 715, 720, 725, 730, 735 and 740.

The method 700 is first operative at step 705 in which the first unit 102 generates a plurality of image data by capturing a plurality of images of a vehicle occupant. Further, the first unit 102 is a detection unit that includes a camera, and an image processing unit that includes an image sensor, an image processor, an image cropping module, an image filter, a neural network module, and others.

In accordance with an embodiment of the present invention, the plurality of images includes a face image, an eye closure image, a seatbelt image, a trunk area image of the vehicle, and others.

At step 710, the second unit 106 is configured to measure a speed of the vehicle. Further, the second unit 106 includes a vehicle speed sensor that is included but not limited to a wheel speed sensor, a Lidar speed sensor, a radar speed sensor, a navigation speed sensor, a tachometer, an optical speed sensor, an Inertial Measurement Unit (IMU), and among others

At step 715, the third unit 104 using a convolution neural network architecture, is configured to extract a feature point information from the plurality of image data to identify the OOI.

At step 720, the third unit 104 extrapolates the object of interest towards at least one pillar of the vehicle.

At step 725, the third unit 104 matches and merges the extrapolated object of interest with the plurality of image data to calculate a number of the presence of the object of interest in a real-time.

In accordance with an embodiment of the present invention, the at least one pillar is anyone or combination of a center or post pillar, a rear pillar, and a back roof pillar of the vehicle. Further, the third unit 104 identifies a depth information while matching and merging the extrapolated object of interest with the plurality of image data for accurate calculation of the number of the presence of the object of interest.

At step 730, the third unit 104 compares the calculated number of the presence of the object of interest with a predefined threshold number of the object of interest presence to confirm the presence of the object of interest, as show in step 735 and perform a plurality of actions, as shown in step 740.

In accordance with an embodiment of the present invention, the third unit 104 confirms the presence of the object of interest, when the calculated number of the presence of the object of interest is above or equal to the predefined threshold number of the object of interest presence.

In accordance with an embodiment of the present invention, the third unit 104 performs the plurality of actions based on the measured speed of the vehicle, when the calculated number of the presence of the object of interest is below the predefined threshold number of the object of interest presence.

In accordance with an embodiment of the present invention, the second 106, and third unit 104 is a monitoring unit and a processing unit, respectively. Further, the third unit 104 dynamically adjusts the predefined threshold limit based on the vehicle speed and the plurality of image data.

In accordance with an embodiment of the present invention, the third unit 104 further categorizes the measured vehicle speed into three speed ranges including a first speed range, a second speed range, and a third speed range. Further, the first speed range includes the vehicle speed which is less than 15 km/h, the second-speed range includes the vehicle speed which lies between 15 km/h and 25 km/h, and the third speed range includes the vehicle speed which is greater than 25 km/h. In addition, the three speed ranges may be predefined by the system 100. Furthermore, the three speed ranges may vary on the basis of a plurality of factors, such as history profile information of any vehicle occupant, current driving behaviour of the vehicle occupant, vehicle servicing log, a current vehicle condition, etc.

In accordance with an embodiment of the present invention, the plurality of actions performed by the third unit 104 based on the vehicle speed category, includes monitoring continuously the measured vehicle's speed, the extracted feature point information, and the presence of the object of interest, when the vehicle speed lies within the first speed range. Further, the plurality of actions includes analyzing a plurality of additional parameters with a secondary check of the measured vehicle's speed, the extracted feature point information, and the presence of the object of interest, when the vehicle speed lies within the second speed range, and involving a manual review for further analysis with continuous check of the measured vehicle's speed, the extracted feature point information, and the presence of the object of interest, when the vehicle speed lies within the third speed range.

In accordance with an embodiment of the present invention, the method 700 further including alerting the vehicle occupant by generating a warning signal when the calculated number of presences of object of interest is below the predefined threshold number of the object of interest.

In accordance with an embodiment of the present invention, the method 700 further including logging the detection result of the presence of the object of interest into a storage unit.

In accordance with an embodiment of the present invention, the method 700 further including monitoring, periodically, the presence of the object of interest on the vehicle occupant body by the third unit 104 and providing a real-time update and the warning signal to the vehicle occupant if a status of the object of interest is changed.

In accordance with an embodiment of the present invention, the method 700 further including calibrating, periodically, the measurement of the vehicle speed to ensure a speed measurement accuracy and updating the second unit 106 according to the calibration.

In an advantageous embodiment of the present invention, the system 100 and 400 are designed to operate effectively across all times of day and night, under a wide range of environmental conditions. It ensures seamless functionality and user experience regardless of body type, gender, skin color, headgear (including scarves, masks, and mufflers), and ethnicity, like others of any occupant of the vehicle.

In accordance with an advantageous embodiment of the present invention, the system 100 identifies the presence of the object of interest (OOI) (e.g. a seat belt) on the driver or vehicle occupant body to enhance overall safety. Further, the system 100 enhances safety measures that further lead to fewer accidents and collisions, lowering the risk of injury and property damage.

In accordance with another advantageous embodiment of the present invention, the system 100 takes various actions based on the vehicle's speed when the detected count of the object of interest falls below a predefined threshold. If the third unit 104 detects the absence of the object of interest on the vehicle occupant's body, the system 100 provides automatic real-time alerts to the vehicle occupant.

In accordance with another advantageous embodiment of the present invention, the invention employs the Convolutional Neural Networks (CNNs) to analyze the plurality of images of the vehicle occupant and the seatbelt (OOI). The system 100 can distinguish between a correctly fastened seatbelt and one that is improperly fastened by using deep learning algorithms.

In accordance with another advantageous embodiment, the invention is meticulously engineered to comply with stringent regulatory safety standards for vehicle operation and to prevent impaired driving. It includes fail-safe mechanisms and redundant systems to ensure dependable performance across various environmental and driving conditions. Regular maintenance and calibration are crucial for maintaining the system's 100 accuracy and effectiveness.

While the detailed description has shown, described, and pointed out novel features as applied to various alternatives, it can be understood that various omissions, substitutions, and changes in the form and details of the devices or algorithms illustrated can be made without departing from the scope of the disclosure. As can be recognized, certain alternatives described herein can be embodied within a form that does not provide all of the features and benefits set forth herein, as some features can be used or practiced separately from others.

The disclosures and the description herein are intended to be illustrative and are not in any sense limiting the invention, defined in scope by the following claims.

### ELEMENT LIST

| **COMPONENT** | **REFERENCE NUMBER** |
|---|---|
| System | 100 |
| First Unit | 102 |
| Thid unit | 104 |
| Second unit | 106 |
| Schematic diagram | 500 |
| Input module | 505 |
| Feature extraction module | 510 |
| Dimensionality reduction module | 515 |
| Flattening module | 520 |
| Identification module | 525 |
| Decision module | 530 |

## Claims

1. An object of interest (OOI) identification method for a vehicle, comprising:
generating, by a first unit 102, a plurality of image data by capturing a plurality of images of a vehicle occupant;
measuring, by a second unit 106, a speed of the vehicle;
extracting, by a third unit 104, a feature point information from the plurality of image data to identify the object of interest (OOI);
extrapolating, by the third unit 104, the object of interest towards at least one pillar of the vehicle;
merging and matching, by the third unit 104, the extrapolated object of interest with the plurality of image data to calculate a number of the presence of the object of interest in a real-time; and
comparing, by the third unit 104, the calculated number of the presence of the object of interest with a predefined threshold number of the object of interest presence to:
confirm the presence of the object of interest; and
perform a plurality of actions.

2. The method 700 as claimed in claim 1, wherein the plurality of actions is performed by the third unit 104 on the basis of the measured speed of the vehicle, when the calculated number of the presence of the object of interest is below the predefined threshold number of the object of interest presence.

3. The method 700 as claimed in claim 1, wherein the third unit 104 confirms the presence of the object of interest when the calculated number of the presence of the object of interest is above or equal to the predefined threshold number of the object of interest presence.

4. The method 700 as claimed in claim 1, wherein the at least one pillar is anyone or combination of a center or post pillar, a rear pillar, and a back roof pillar of the vehicle.

5. The method 700 as claimed in claim 1, wherein the first unit 102 is a detection unit that includes a camera, and an image processing unit that includes an image sensor, an image processor, an image cropping module, an image filter, a neural network module and the second 106, and third unit 104 is a monitoring unit and a processing unit, respectively.

6. The method 700 as claimed in claim 1, wherein the third unit 104 identifies a depth information while matching and merging the extrapolated object of interest with the plurality of image data for accurate calculation of the number of the presence of the object of interest.

7. The method 700 as claimed in claim 1, wherein the third unit 104 further categorizes the measured vehicle speed into three speed ranges including a first speed range, a second speed range, and a third speed range, wherein further the plurality of actions performed by the third unit 104 based on the vehicle speed category, includes:
monitoring continuously the measured vehicle's speed, the extracted feature point information, and the presence of the object of interest, when the vehicle speed lies within the first speed range;
analyzing a plurality of additional parameters with a secondary check of the measured vehicle's speed, the extracted feature point information, and the presence of the object of interest, when the vehicle speed lies within the second speed range; and
involving a manual review for further analysis with continuous check of the measured vehicle's speed, the extracted feature point information, and the presence of the object of interest, when the vehicle speed lies within the third speed range.

8. The method 700 as claimed in claim 1, wherein the plurality of images includes a face image, an eye closure image, a seatbelt image, a trunk area image of the vehicle, and others.

9. The method 700 as claimed in claim 1, wherein the second unit 106 includes a vehicle speed sensor that is included but not limited to a wheel speed sensor, a Lidar speed sensor, a radar speed sensor, a navigation speed sensor, a tachometer, an optical speed sensor, an Inertial Measurement Unit (IMU), and among others.

10. The method 700 as claimed in claim 1, wherein the method 700 further including alerting the vehicle occupant by generating a warning signal when the calculated number of presences of object of interest is below the predefined threshold number of the object of interest.

11. The method 700 as claimed in claim 1, wherein the method 700 further including logging the detection result of the presence of the object of interest into a storage unit.

12. The method 700 as claimed in claim 1, wherein the method 700 further including:
monitoring, periodically, the presence of the object of interest on the vehicle occupant body by the third unit 104; and
providing a real-time update and the warning signal to the vehicle occupant if a status of the object of interest is changed.

13. The method 700 as claimed in claim 1, wherein the method 700 further including:
calibrating, periodically, the measurement of the vehicle speed to ensure a speed measurement accuracy; and
updating the second unit 106 according to the calibration.

14. The method 700 as claimed in claim 1, wherein the third unit 104 dynamically adjusts the predefined threshold limit based on the vehicle speed and the plurality of image data.

15. An object of interest (OOI) identification system for a vehicle, comprising:
a first unit 102, generates a plurality of image data by capturing a plurality of images of a vehicle occupant;
a second unit 106, configured to measure a speed of the vehicle; and
a third unit 104 using a convolution neural network architecture, configured to:
extract a feature point information from the plurality of image data;
detect a presence of the object of interest on a vehicle occupant body based on the extracted feature point information;
extrapolate the object of interest towards at least one pillar of the vehicle;
match and merge the extrapolated object of interest with the plurality of image data to calculate a number of the presence of the object of interest in a real-time;
calculate a number of the presence of the object of interest detection in a real-time; and
compare the calculated number of the presence of the object of interest with a predefined threshold number of the object of interest presence to:
confirm the presence of the object of interest; and
perform a plurality of actions.
